# EUROPÄISCHE PATENTSCHRIFT

(11) **EP 1 045 125 B1**
(45) Veröffentlichungstag und Bekanntmachung des Hinweises auf die Patenterteilung: **13.10.2004**
(21) Anmeldenummer: 00100020.7
(22) Anmeldetag: 04.01.2000
(51) Int. Cl.: F02D 41/30, F02D 41/40, F02D 41/24

(54) **Verfahren und Vorrichtung zur Steuerung einer Brennkraftmaschine**
Method and apparatus for controlling an internal combustion engine
Procédé et dispositif de commande d'un moteur à combustion interne

(30) Priorität: 13.04.1999 DE 19916558
(43) Veröffentlichungstag der Anmeldung: 18.10.2000
(73) Patentinhaber: ROBERT BOSCH GMBH, 70442 Stuttgart (DE)
(72) Erfinder: Straub, Detlev, 70499 Stuttgart (DE); Schulz, Udo, 71665 Vaihingen/Enz (DE)

(56) Entgegenhaltungen:
- EP-A- 0 771 943
- EP-A- 0 887 525
- DE-A- 19 712 143

## Beschreibung

### Stand der Technik

Die Erfindung betrifft ein Verfahren und eine Vorrichtung zur Steuerung einer Brennkraftmaschine gemäß den Oberbegriffen der unabhängigen Ansprüche.

Ein Verfahren und eine Vorrichtung zur Steuerung einer Brennkraftmaschine sind aus der DE-OS 197 12 143 bekannt. Dort wird ein Einspritzvorgang eines Zumeßzykluses in wenigstens eine erste Teileinspritzung und eine zweite Teileinspritzung aufgeteilt.

Bei solchen Verfahren und Vorrichtungen werden ausgehend von wenigstens einer Betriebskenngröße eine Kraftstoffmenge und ausgehend von der Kraftstoffmenge vorzugsweise unter Verwendung des Kraftstoffdrucks eine Ansteuerdauer für einen Injektor bestimmt. Alternativ kann auch vorgesehen sein, daß ausgehend von wenigstens der Betriebskenngröße die Ansteuerdauer unmittelbar in einem Kennfeld abgelegt ist.

Bei der ersten Vorgehensweise ist die Kraftstoffmenge für die erste Teileinspritzung vorzugsweise dahingehend in einem Kennfeld abgelegt, daß sich optimale Werte mit Blick auf die Abgasemissionen und das Leistungsvermögen der Brennkraftmaschine ergeben. Bei der zweiten Art der Berechnung, bei der die Ansteuerdauer unmittelbar in einem Kennfeld abhängig von den Betriebskenngrößen abgelegt ist, ist das Kennfeld derart ausgebildet, daß die Ansteuerdauer so gewählt ist, daß sich eine möglichst geringe Geräuschemission ergibt.

Um möglichst günstige Werte mit Blick auf die Emission und das Leistungsverhalten der Brennkraftmaschine zu erzielen, sollte die Kraftstoffmenge abhängig von den Betriebskenngrößen abgelegt sein. Ausgehend von dieser Kraftstoffmenge kann dann die Ansteuerdauer berechnet werden. Um eine möglichst geringe Geräuschemission zu erzielen, sollte die Ansteuerdauer unmittelbar abhängig von den Betriebskenngrößen abgelegt sein.

### Aufgabe der Erfindung

Der Erfindung liegt die Aufgabe zugrunde, bei einem Verfahren und einer Vorrichtung zur Steuerung einer Brennkraftmaschine die Ansteuerdauer einer ersten Teileinspritzung derart vorzugeben, daß sowohl mit Blick auf die Emissionen und das Leistungsvermögen als auch auf die Geräuschemissionen günstige Werte ergeben.

Diese Aufgabe wird durch die in den unabhängigen Ansprüchen gekennzeichneten Merkmale gelöst.

### Vorteile der Erfindung

Erfindungsgemäß wird ausgehend von wenigstens einer Betriebskenngröße eine erste Kraftstoffmenge und ausgehend von der ersten Kraftstoffmenge eine erste Ansteuerdauer bestimmt, eine zweite Ansteuerdauer wird ausgehend von wenigstens einer Betriebskenngröße bestimmt, aus der ersten Ansteuerdauer und der zweiten Ansteuerdauer wird eine Ansteuerdauer zur Beaufschlagung eines Stellgliedes ausgewählt. Durch diese Vorgehensweise können mit Blick auf unterschiedliche Kriterien günstige Werte für die Ansteuerdauer vorgegeben und anschließend ausgewählt werden.

Besonders vorteilhaft ist es, daß die größere der beiden Ansteuerdauern ausgewählt wird. Dadurch kann gewährleistet werden, daß eine minimale Ansteuerdauer nicht unterschritten wird, die beispielsweise mit Blick auf Geräuschemissionen erforderlich ist.

Vorteilhaft ist ferner, daß ausgehend von der zweiten Ansteuerdauer eine zweite Kraftstoffmenge bestimmt wird, wobei aus der ersten Kraftstoffmenge und der zweiten Kraftstoffmenge eine Kraftstoffmenge ausgewählt wird. Diese ausgewählte Kraftstoffmenge kann bei der Steuerung der Brennkraftmaschine berücksichtigt werden. Insbesondere kann die Kraftstoffmenge bei der Haupteinspritzung um einen von dieser Menge abhängigen Betrag reduziert werden.

Die erfindungsgemäße Vorrichtung zur Steuerung einer Brennkraftmaschine umfaßt erste Mittel, die ausgehend von wenigstens einer Betriebskenngröße eine erste Kraftstoffmenge und ausgehend von der ersten Kraftstoffmenge eine erste Ansteuerdauer bestimmen, zweite Mittel, die ausgehend von wenigstens einer Betriebskenngröße eine zweite Ansteuerdauer bestimmen, und Auswahlmittel, die aus der ersten Ansteuerdauer und der zweiten Ansteuerdauer eine Ansteuerdauer zur Beaufschlagung eines Stellgliedes auswählen.

Weitere vorteilhafte Ausgestaltungen sind in den Unteransprüchen gekennzeichnet.

### Zeichnung

Die Erfindung wird nachstehend anhand der in der Zeichnung dargestellten Ausführungsformen erläutert. Es zeigen Figur 1 ein Blockdiagramm der erfindungsgemäßen Vorrichtung, Figur 2 eine detailliertere Darstellung der Berechnung der Ansteuerdauer und der einzuspritzenden Kraftstoffmenge und Figur 3 eine detaillierte Darstellung einer Auswahleinrichtung.

Im folgenden wird die Erfindung am Beispiel einer Voreinspritzung und einer Haupteinspritzung bei einer direkteinspritzenden Brennkraftmaschine beschrieben. Die Vorgehensweise ist aber nicht auf diese Anwendung beschränkt. Sie kann eingesetzt werden, wenn wenigstens zwei Teileinspritzungen vorgesehen sind.

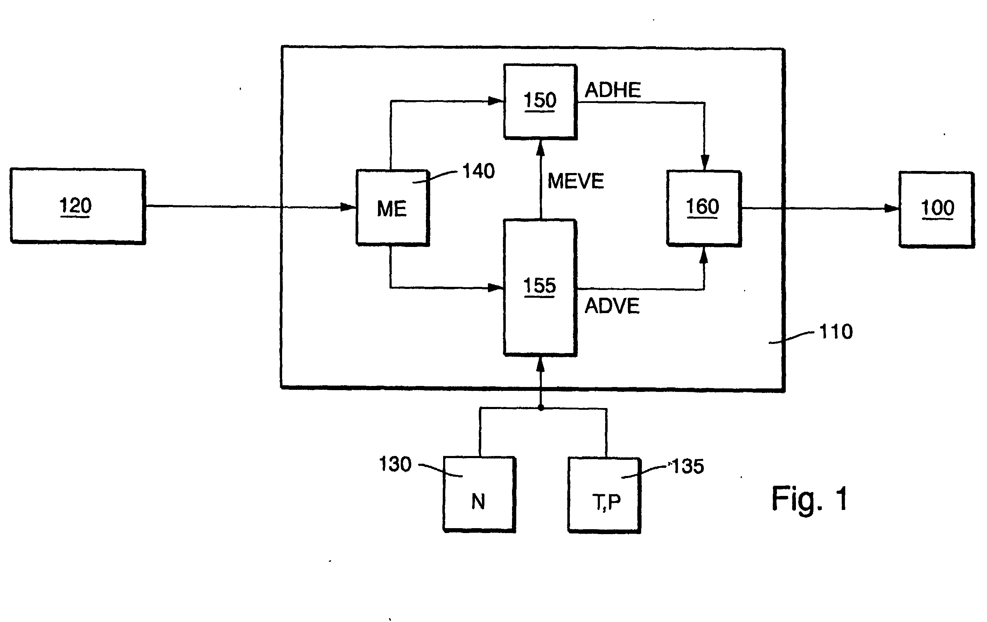

In Figur 1 ist ein Kraftstoffversorgungssystem einer Brennkraftmaschine dargestellt. Mit 100 ist ein Stellglied zur Kraftstoffeinspritzung dargestellt. Als Stellglieder werden häufig sogenannte Injektoren eingesetzt, über die Kraftstoff von einem Speicher in den Brennraum der Brennkraftmaschine gelangt. Die Kraftstoffmenge, die bei einem Einspritzvorgang zugemessen wird, wird durch die Ansteuerzeiten für den Injektor festgelegt. Die Injektoren können mit einem Magnetventil oder mit einem kapazitivem Element ausgestattet sein.

Der Injektor 100 wird von einem Steuergerät 110 mit Ansteuersignalen beaufschlagt. Das Steuergerät 110 wird mit einem Ausgangssignal einer Momentenvorgabe 120 und mit den Ausgangssignalen verschiedener Sensoren 135 und eines Drehzahlsensors 130 beaufschlagt.

Das Ausgangssignal der Momentenvorgabe 120 gelangt zu einer Mengenberechnung 140. Die Mengenberechnung 140 berechnet ausgehend von dem Ausgangssignal der Momentenvorgabe 120, die beispielsweise ein Signal bezüglich des Fahrerwunsches vorgibt, ein Signal ME, daß die einzuspritzende Kraftstoffmenge kennzeichnet. Die Mengenberechnung 140 liefert das Signal ME bezüglich der einzuspritzenden Kraftstoffmenge an eine erste Steuerung 150 und an eine zweite Steuerung 155. Die erste Steuerung 150 und die zweite Steuerung 155 beaufschlagen die Endstufe 160 mit einer Ansteuerdauer ADVE, die die Voreinspritzmenge bestimmt, und mit einer weiteren Ansteuerdauer ADHE, die die Haupteinspritzmenge bestimmt. Ferner beaufschlagt die zweite Steuerung 155 die erste Steuerung 150 mit einem Signal MEVE.

Der zweiten Steuerung 155 werden die Ausgangssignale N des Drehzahlsensors 130 und die Ausgangssignale T und P der weiteren Sensoren 135 zugeleitet. Entsprechende Signale werden auch der ersten Steuerung 150 zugeleitet, diese sind nicht dargestellt.

Diese Einrichtung arbeitet nun wie folgt. Die Momentenvorgabe 120 liefert ein Signal, daß dem Fahrerwunsch entspricht. Hierbei handelt es sich in der einfachsten Ausgestaltung um einen Fahrpedalstellungsgeber, der ein Signal liefert, daß der Fahrpedalstellung entspricht. Ausgehend von diesem Momentenwunsch berechnet die Mengenberechnung 140 das Signal ME, daß der einzuspritzenden Kraftstoffmenge entspricht. Die erste Steuerung 150 bestimmt ausgehend von der einzuspritzenden Kraftstoffmenge ME die weitere Ansteuerdauer ADHE, die zur Einspritzung dieser Kraftstoffmenge ME erforderlich ist. Die Endstufe 160 setzt diese Ansteuerdauer in ein Ansteuersignal zur Beaufschlagung des Stellgliedes 100 um.

Häufig wird der Einspritzvorgang eines Zumeßzykluses in wenigstens eine erste Teileinspritzung und eine zweite Teileinspritzung aufgeteilt. Dabei wird die erste Teileinspritzung üblicherweise als Voreinspritzung und die zweite Teileinspritzung als Haupteinspritzung bezeichnet. Die Voreinspritzung dient vorzugsweise zur Geräuschreduzierung.

Durch die Voreinspritzung können aber auch die Emissionen und das abgegebene Moment optimiert werden. Um eine Geräuschreduzierung zu erzielen, muß die Ansteuerdauer für die Voreinspritzung abhängig von verschiedenen Betriebskenngrößen vorgegeben werden. Insbesondere muß die Ansteuerdauer für die Voreinspritzung größer als ein Minimalwert sein. Dieser Minimalwert für die Voreinspritzung ist vorzugsweise von der Drehzahl und der einzuspritzenden Kraftstoffmenge sowie von weiteren Betriebskenngrößen wie der Temperatur abhängig. Als Temperatursignal wird vorzugsweise die Kraftstofftemperatur oder eine Größe, die der Kraftstofftemperatur annähernd entspricht, wie die Kühlwasser- und/oder die Lufttemperatur verwendet.

Um die Abgasemissionen und das abgegebene Moment zu optimieren, muß eine bestimmte Kraftstoffmenge eingespritzt werden. Diese Mindestmenge zur Verbesserung der Emissionen und des Moments ist ebenfalls Betriebskenngrößen abhängig. Als wesentliche Betriebskenngrößen gelten hier die eingespritzte Kraftstoffmenge ME, und die Drehzahl N.

Neben der Voreinspritzung und der Haupteinspritzung können noch weitere Teileinspritzung, wie insbesondere eine Nacheinspritzung vorgesehen sein. Desweiteren ist es möglich, daß mehrere Voreinspritzungen, Haupteinspritzung und/oder Nacheinspritzungen durchgeführt werden.

Die zweite Steuerung 155 berechnet ausgehend von der einzuspritzenden Kraftstoffmenge ME, der Drehzahl N und weiterer Betriebskenngrößen, wie dem Druck P in dem Druckspeicher, der dem Kraftstoffdruck entspricht und einem Temperaturwert T, die Ansteuerdauer ADVE, die die Voreinspritzung bestimmt, und die Kraftstoffmenge MEVE, die bei der Voreinspritzung der Brennkraftmaschine zugemessen wird.

Die Kraftstoffmenge MEVE, die bei der Voreinspritzung zugemessen wird, gelangt zur ersten Steuerung 150, wo sie weiterverarbeitet wird. Vorzugsweise ist vorgesehen, daß die Kraftstoffmenge, die bei der Haupteinspritzung zugemessen wird, um die Kraftstoffmenge MEVE, die bei der Voreinspritzung zugemessen wird, vermindert wird.

Die erste Steuerung 150 berechnet ausgehend von der Kraftstoffmenge ME und der Kraftstoffmenge MEVE, die bei der Voreinspritzung zugemessen wurde, die Ansteuerdauer ADHE der Haupteinspritzung. Die Endstufe 160 setzt die Ansteuerdauer ADVE und die Ansteuerdauer ADHE in ein Ansteuersignal für das Stellglied 100 um.

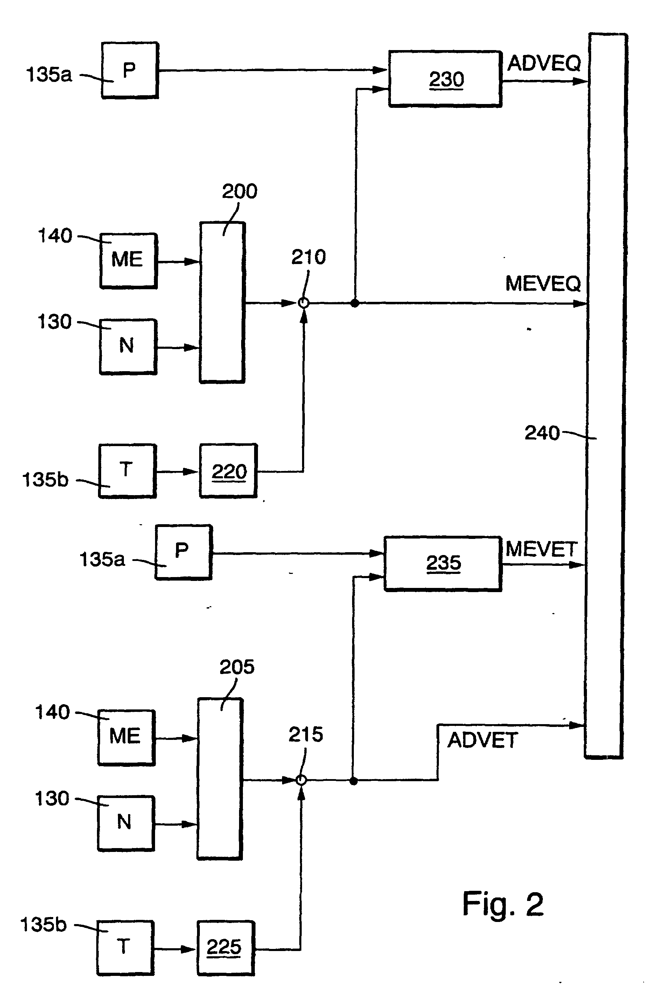

In der Figur 2 ist die zweite Steuerung 155 detaillierter dargestellt. Bereits in Figur 1 beschriebene Elemente sind mit entsprechenden Bezugszeichen bezeichnet.

Das Ausgangssignal ME der Mengenberechnung 140 und das Drehzahlsignal N des Drehzahlsensors 130 gelangt zu einem ersten Kennfeld 200. Das erste Kennfeld 200 beaufschlagt einen Verknüpfungspunkt 210 mit einem Signal, an dessen zweiten Eingang das Ausgangssignal einer ersten Korrektur 220 anliegt. Die erste Korrektur 220 wird mit einem Signal T eines Sensors 135b beaufschlagt. Am Ausgang des Verknüpfungspunktes 210 liegt das Signal MEVEQ an. Dieses Signal gelangt zum einen unmittelbar zu einer Auswahl 240 und zu einer Ansteuerdauerberechnung 230. Die Ansteuerdauerberechnung 230 wird ferner mit dem Ausgangssignal P eines Drucksensors 135a beaufschlagt. Die Ansteuerdauerberechnung 230 berechnet ein Signal ADVEQ, das zur Auswahl 240 gelangt.

Das Ausgangssignal ME der Mengenberechnung 140 und das Drehzahlsignal N des Drehzahlsensors 130 gelangt zu einem zweiten Kennfeld 205. Das zweite Kennfeld 205 beaufschlagt einen Verknüpfungspunkt 215 mit einem Signal, an dessen zweiten Eingang das Ausgangssignal einer zweiten Korrektur 225 anliegt. Die zweite Korrektur 225 wird mit dem Signal T des Sensors 135b beaufschlagt. Am Ausgang des Verknüpfungspunktes 215 liegt das Signal ADVET an. Dieses Signal gelangt zum einen unmittelbar zu der Auswahl 240 und zu einer Mengenvorgabe 235. Die Mengenvorgabe 235 wird ferner mit dem Ausgangssignal P des Drucksensors 135a beaufschlagt. Die Mengenvorgabe 235 berechnet ein Signal MEVET, das zur Auswahl 240 gelangt.

Diese Einrichtung arbeitet nun wie folgt. In dem ersten Kennfeld 200 ist die einzuspritzende erste Kraftstoffmenge MEVEQ für die Voreinspritzung als Funktion der gesamten einzuspritzenden Kraftstoffmenge ME und der Drehzahl N abgelegt. Im Verknüpfungspunkt 210 wird diese erste Kraftstoffmenge MEVEQ mit verschiedenen Korrekturwerten korrigiert. In dem Ausführungsbeispiel der Figur 2 erfolgt eine temperaturabhängige Korrektur. Dabei wird vorzugsweise die Motortemperatur T berücksichtigt. Als Ersatzwert für die Motortemperatur wird vorzugsweise im Kühlwasser mit einem Temperatursensor gemessen. Alternativ kann auch vorgesehen sein, daß ein anderer Temperatursensor als eine Ersatzgröße liefert. Neben der Temperatur können alternativ oder zusätzlich weitere Betriebsparamter und/oder Umweltgrößen zur Bildung von Korrekturwerten verwendet werden.

Ausgehend von der ersten einzuspritzenden Kraftstoffmenge MEVEQ, berechnet die Ansteuerdauerberechnung 230 unter Berücksichtigung des Kraftstoffdruckes P eine erste Ansteuerdauer ADVEQ für den Injektor, die erforderlich ist, um die erste Kraftstoffmenge MEVEQ zuzumessen. Das erste Kennfeld 200 ist derart ausgelegt, daß die einzuspritzende Kraftstoffmenge der Voreinspritzung so gewählt ist, daß möglichst geringe Abgasemissionen auftreten und/oder sich ein möglichst hohes Drehmoment ergibt.

In dem zweiten Kennfeld 205 ist eine zweite Ansteuerdauer ADVET für die Voreinspritzung abhängig von der einzuspritzenden Kraftstoffmenge ME und der Drehzahl N abgelegt. Im Verknüpfungspunkt 215 wird diese zweite Ansteuerdauer abhängig von der Temperatur des Kraftstoffes und/oder anderen Größen korrigiert. Diese so korrigierte zweite Ansteuerdauer ADVET der Voreinspritzung gelangt zum einen zur Auswahl 240 und zum anderen zu der Mengenvorgabe 235. Neben der Temperatur können alternativ oder zusätzlich weitere Betriebsparamter und/oder Umweltgrößen zur Bildung von Korrekturwerten verwendet werden.

Die Mengenvorgabe bestimmt ausgehend von dem Druck P im Speicher und der zweiten Ansteuerdauer ADVET, die zweite Kraftstoffmenge MEVET der Voreinspritzung. Diese zweite Kraftstoffmenge MEVET gelangt ebenfalls zur Auswahl 240.

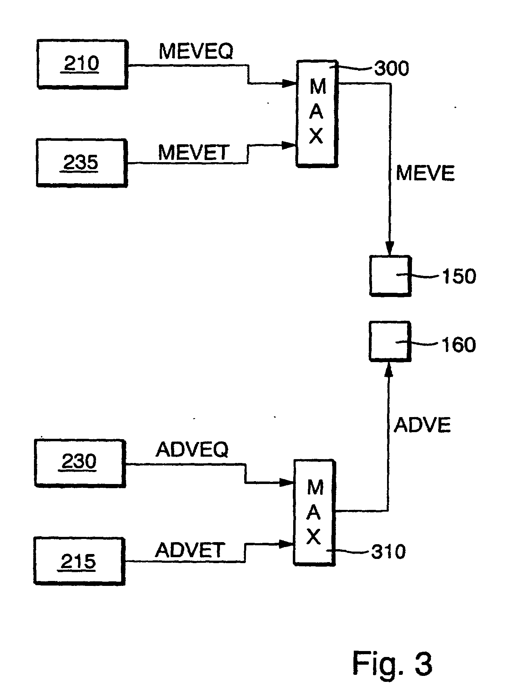

Eine einfache Ausführungsform der Auswahl 240 ist in Figur 3 detaillierter dargestellt. Bereits in den Figuren 1 und 2 beschriebene Elemente sind in Figur 3 mit entsprechenden Bezugszeichen bezeichnet. Die erste Kraftstoffmenge MEVEQ des Verknüpfungspunktes 210 und die zweite Kraftstoffmenge MEVET der Mengenvorgabe 235 gelangen zu einer ersten Maximalauswahl 300. Entsprechend gelangen die zweite Ansteuerdauer ADVET des Verknüpfungspunktes 215 und die erste Ansteuerdauer ADVEQ der Ansteuerdauervorgabe 230 zu einer zweiten Maximalauswahl 310. Das Ausgangssignal der Maximalauswahl 300 gelangt als Kraftstoffmengensignal MEVE zur ersten Steuerung 150 und die das Ausgangssignal der zweiten Maximalauswahl 310 gelangt Ansteuerdauer ADVE zur Endstufe 160.

Die Einrichtung gemäß der Figur 2 und 3 arbeitet wie folgt: Ausgehend von der gesamten einzuspritzenden Kraftstoffmenge ME und der Drehzahl N ist in dem ersten Kennfeld 200 die einzuspritzende Kraftstoffmenge für die Voreinspritzung abgelegt. Ausgehend von dieser aus dem Kennfeld 200 ausgelesenen Kraftstoffmenge für die Voreinspritzung wird mittels einer Korrektur im Verknüpfungspunkt die erste Kraftstoffmenge MEVEQ bestimmt.

Desweiteren berechnet die Mengenvorgabe 235 die zweite Kraftstoffmenge MEVET ausgehend von der zweiten Ansteuerdauer ADVET, die in dem zweiten Kennfeld 205 abgelegt ist, und dem Kraftstoffdruck P im Druckspeicher.

Aus der berechneten zweiten Kraftstoffmenge MEVET und der aus dem Kennfeld 200 ausgelesenen ersten Kraftstoffmenge MEVEQ wird die Kraftstoffmenge MEVE für die Voreinspritzung ausgewählt, die von der ersten Steuerung 150 berücksichtigt wird. Bei einer besonders vorteilhaften Ausführungsform wird die größere der beiden Kraftstoffmengen berücksichtigt.

Entsprechend werden die zweite Ansteuerdauer ADVET, die aus dem zweiten Kennfeld 205 ausgelesen und anschließend korrigiert wurde, und die erste Ansteuerdauer ADVEQ, die ausgehend von der Voreinspritzmenge MEVEQ und dem Raildruck P berechnet wurde, ebenfalls verglichen und eine Ansteuerdauer ADVE ausgewählt. Vorzugsweise wird auch hier die größere der beiden Ansteuerdauern ausgewählt.

Dadurch wird gewährleistet, daß zum einen die optimalen Werte bezüglich Kraftstoffemissionen und Leistungsabgabe eingestellt werden, wobei gleichzeitig die Ansteuerdauer so gewählt ist, daß die Geräuschemissionen reduziert werden. Erfindurigsgemäß wurde erkannt, daß zur Geräuschemission eine bestimmte Ansteuerdauer der Voreinspritzung erforderlich ist. Durch die Maximalauswahl 310 wird gewährleistet, daß zumindestens eine Ansteuerdauer gewählt wird, die größer oder gleich der Ansteuerdauer ADVET, die aus dem zweiten Kennfeld 205 ausgelesen wurde.

Besonders vorteilhaft ist es, wenn beim Vorliegen bestimmter Bedingungen die Größe MEVE, die zur ersten Steuerung 150 übertragen wird auf Null gesetzt wird. Dies ist insbesondere dann vorteilhaft, wenn die zweite Maximalauswahl 310 die Ansteuerdauer ADVET auswählt. Dies bedeutet, die Einspritzmenge der Voreinspritzung wird bei der Steuerung nicht berücksichtigt, da diese Einspritzmenge ausschließlich aus Geräuschgründen zugemessen wird und keinen Einfluß auf das Motormoment hat.

Bei einer weiteren vorteilhaften Ausgestaltung kann vorgesehen sein, daß die Auswahl 240 die Ansteuerdauer ADVE aus der ersten Ansteuerdauer ADVEQ und der zweiten Ansteuerdauer ADVET abhängig von anderen Kriterien auswählt. So kann beispielsweise vorgesehen sein, daß wenn ein Betrieb mit geringen Geräuschemissionen gewünscht wird, die zweite Ansteuerdauer ADVET ausgewählt wird. Wird dagegen ein Betrieb mit möglichst hoher Leistung und/oder mit geringen Abgasemissionen gewünscht, so wird die erste Ansteuerdauer ADVEQ ausgewählt.

Die Entscheidung nach welchen Kriterien ausgewählt wird, kann dabei vom Wunsch des Fahrers und/oder vom Verhalten des Fahrers des angetriebenen Fahrzeugs abhängen. Alternativ oder ergänzend können die Kriterien auch vom Betriebszustand abhängen.

Besonders vorteilhaft ist es, wenn die Ansteuerdauer und die entsprechende Kraftstoffmenge ausgewählt wird. Das heißt, daß die erste Ansteuerdauer ADVEQ und die erste Kraftstoffmenge MEVEQ bzw. die zweite Ansteuerdauer ADVET und die zweite Kraftstoffmenge MEVET ausgewählt werden.

## Patentansprüche

1. Verfahren zur Steuerung einer Brennkraftmaschine, wobei ein Einspritzvorgang eines Zumeßzykluses in wenigstens eine erste Teileinspritzung und eine zweite Teileinspritzung aufgeteilt ist, daß ausgehend von wenigstens einer Betriebskenngröße eine erste Kraftstoffmengefür die erste Teileinspritzung bestimmt wird, daß ausgehend von der ersten Kraftstoffmenge eine erste Ansteuerdauer für die erste Teileinspritzung bestimmt wird, daß ausgehend von wenigstens einer Betriebskenngröße eine zweite Ansteuerdauer für die erste Teileinspritzung bestimmt wird, daß aus der ersten Ansteuerdauer und der zweiten Ansteuerdauer eine Ansteuerdauer zur Beaufschlagung eines Stellgliedes ausgewählt wird.

2. Verfahren nach Anspruch 1, **dadurch gekennzeichnet, daß** ausgehend von der zweiten Ansteuerdauer eine zweite Kraftstoffmenge bestimmt wird.

3. Verfahren nach Anspruch 1 oder 2, **dadurch gekennzeichnet, daß** die größere der beiden Ansteuerdauern ausgewählt wird.

4. Verfahren nach einem der vorhergehenden Ansprüche, **dadurch gekennzeichnet, daß** aus der ersten Kraftstoffmenge und der zweiten Kraftstoffmenge eine Kraftstoffmenge ausgewählt wird.

5. Verfahren nach Anspruch 4, **dadurch gekennzeichnet, daß** die größere der Kraftstoffmengen ausgewählt wird.

6. Verfahren nach einem der vorhergehenden Ansprüche, **dadurch gekennzeichnet, daß** die erste Kraftstoffmenge ausgehend von der wenigstens einer Betriebskenngrößen mit Blick auf günstigen Wirkungsgrad vorgebbar ist.

7. Verfahren nach einem der vorhergehenden Ansprüche, **dadurch gekennzeichnet, daß** die zweite Ansteuerdauer ausgehend von der wenigstens einen Betriebskenngröße mit Blick auf günstige Geräuschemissionen vorgebbar ist.

8. Vorrichtung zur Steuerung einer Brennkraftmaschine, wobei ein Einspritzvorgang eines Zumeßzykluses in wenigstens eine erste Teileinspritzung und eine zweite Teileinspritzung aufgeteilt ist, mit ersten Mitteln, die ausgehend von wenigstens einer Betriebskenngröße eine erste Kraftstoffmenge für die erste Teileinspritzung und ausgehend von der ersten Kraftstoffmenge eine erste Ansteuerdauer für die erste Teileinspritzung bestimmen, mit zweiten Mitteln, die ausgehend von wenigstens einer Betriebskenngröße eine zweite Ansteuerdauer für die erste Teileinspritzung bestimmen, und mit Auswahlmitteln, die aus der ersten Ansteuerdauer und der zweiten Ansteuerdauer eine Ansteuerdauer zur Beaufschlagung eines Stellgliedes auswählen.

## Claims

1. Method for controlling an internal combustion engine, an injection process of a metering cycle being divided into at least a first part injection and a second part injection, in that a first quantity of fuel. for the first part injection is determined on the basis of at least one operating characteristic variable, in that a first actuation period for the first part injection is determined on the basis of the first quantity of fuel, in that a second actuation period for the first part injection is determined on the basis of at least one operating characteristic variable, and in that an actuation period for acting on an actuator element is selected from the first actuation period and the second actuation period.

2. Method according to Claim 1, **characterized in that** a second quantity of fuel is determined on the basis of the second actuation period.

3. Method according to Claim 1 or 2, **characterized in that** the longer of the two actuation periods is selected.

4. Method according to one of the preceding claims, **characterized in that** a quantity of fuel is selected from the first quantity of fuel and the second quantity of fuel.

5. Method according to Claim 4, **characterized in that** the larger of the quantities of fuel is selected.

6. Method according to one of the preceding claims, **characterized in that** the first quantity of fuel can be predefined in terms of favourable efficiency on the basis of the at least one operating characteristic variable.

7. Method according to one of the preceding claims, **characterized in that** the second actuation period can be predefined in terms of favourable noise emission on the basis of the at least one operating characteristic variable.

8. Device for controlling an internal combustion engine, an injection process of a metering cycle being divided into at least a first part injection and a second part injection, having first means. which determine a first quantity of fuel for the first part injection on the basis of at least one operating characteristic variable, and a first actuation period for the first part injection on the basis of the first quantity of fuel, having second means which determine a second actuation period for the first part injection on the basis of at least one operating characteristic variable, and having selection means which select an actuation period for acting on an actuator element from the first actuation period and the second actuation period.

## Revendications

1. Procédé de commande d'un moteur à combustion interne, selon lequel un processus d'injection d'un cycle de dosage est divisé en au moins une première injection partielle et une seconde injection partielle,
**caractérisé en ce que**
- on détermine à partir d'au moins un paramètre de fonctionnement une première quantité de carburant pour la première injection partielle,
- on détermine, à partir de la première quantité de carburant une première durée de commande pour la première injection partielle,
- on détermine à partir d'au moins un paramètre de fonctionnement une seconde durée de commande pour la première injection partielle, et
- à partir de la première durée de commande et de la seconde durée de commande on sélectionne une durée de commande pour alimenter un actionneur.

2. Procédé selon la revendication 1,
**caractérisé en ce qu'**
à partir de la seconde durée de commande une seconde quantité de carburant est déterminée.

3. Procédé selon la revendication 1 ou 2,
**caractérisé en ce qu'**
on sélectionne la plus grande des deux durées de commande.

4. Procédé selon l'une quelconque des revendications précédentes,
**caractérisé en ce qu'**
on sélectionne à partir de la première quantité de carburant et de la seconde quantité de carburant une quantité de carburant.

5. Procédé selon la revendication 4,
**caractérisé en ce que**
on sélectionne la plus grande des quantités de carburant.

6. Procédé selon l'une quelconque des revendications précédentes,
**caractérisé en ce que**
la première quantité de carburant peut être prédéterminée à partir de l'au moins un paramètre de fonctionnement pour obtenir le rendement le plus favorable.

7. Procédé selon l'une quelconque des revendications précédentes,
**caractérisé en ce que**
la seconde durée de commande peut être prédéterminée à partir de l'au moins un paramètre de fonctionnement pour obtenir des émissions de bruit favorables.

8. Dispositif de commande d'un moteur à combustion interne, dans lequel un processus d'injection d'un cycle de dosage est divisé en au moins une première injection partielle et une seconde injection partielle,
**caractérisé par**
- des premiers moyens qui à partir d'au moins un paramètre de fonctionnement déterminent une première quantité de carburant pour la première injection partielle et à partir de la première quantité de carburant une première durée de commande pour la première injection partielle, ainsi que
- des seconds moyens qui à partir d'au moins un paramètre de fonctionnement déterminent une seconde durée de commande pour la première injection partielle, et
- des moyens de sélection sélectionnant une durée de commande pour l'alimentation d'un actionneur à partir de la première durée de commande et de la seconde durée de commande.
